# EUROPÄISCHE PATENTANMELDUNG

(11) **EP 3 943 984 A1**
(43) Veröffentlichungstag der Anmeldung: **26.01.2022**
(21) Anmeldenummer: 20187029.2
(22) Anmeldetag: 21.07.2020
(51) Int. Cl.: G01T 1/20, G01F 23/288

(54) **RADIOMETRISCHES MESSGERÄT UND VERFAHREN ZUM BETREIBEN DES RADIOMETRISCHEN MESSGERÄTS**

(71) Anmelder: BERTHOLD TECHNOLOGIES GmbH & Co. KG, 75323 Bad Wildbad (DE)
(72) Erfinder: Müller, Steffen, 75173 Pforzheim (DE); Bäuerle, Jörg, 72270 Baiersbronn (DE)
(74) Vertreter: Patentanwälte Ruff, Wilhelm, Beier, Dauster & Partner mbB

(57) **Zusammenfassung**

Radiometrisches Messgerät (100), aufweisend:
- einen stabförmigen Szintillator (1),
- einen Photodetektor (2),
- einen Spiegel (3),
- wobei der Photodetektor (2) mit einem ersten Ende (1a) des stabförmigen Szintillators (1) optisch gekoppelt ist, und
- wobei der Spiegel (3) an einem zweiten Ende (1b) des stabförmigen Szintillators (1) angeordnet ist, wobei das zweite Ende (1b) dem ersten Ende (1a) gegenüberliegt, und

- eine Auswerteeinheit (4), die mit dem Photodetektor (2) gekoppelt ist und die dazu ausgebildet ist, basierend auf einem von dem Photodetektor (2) erzeugten Impuls (IP) einen Ort (B) in Längsrichtung (x) des stabförmigen Szintillator (1) zu ermitteln, an dem ein den Impuls (IP) verursachendes Teilchen einer ionisierenden Strahlung auf den stabförmigen Szintillator (1) getroffen ist.

## Beschreibung

Die Erfindung betrifft ein radiometrisches Messgerät und ein Verfahren zum Betreiben des radiometrischen Messgeräts.

Der Erfindung liegt die Aufgabe zugrunde, ein radiometrisches Messgerät und ein Verfahren zum Betreiben des radiometrischen Messgeräts zur Verfügung zu stellen, die eine zuverlässige und einfache Ermittlung einer Messgröße ermöglichen.

Das radiometrische Messgerät weist einen herkömmlichen stabförmigen Szintillator auf. Der stabförmige Szintillator kann beispielsweise eine Länge von bis zu 10 Metern aufweisen. Im Übrigen sei insoweit auch auf die einschlägige Fachliteratur verwiesen.

Das radiometrische Messgerät weist weiter einen herkömmlichen Photodetektor auf, beispielsweise in Form eines herkömmlichen Photomultipliers (Photoelektronenvervielfacher) oder eines Silicon Photomultipliers (SiPM).

Das radiometrische Messgerät weist weiter einen herkömmlichen optischen Spiegel auf, wobei der Photodetektor mit einem ersten Ende des stabförmigen Szintillators optisch gekoppelt ist und der Spiegel an einem zweiten Ende des stabförmigen Szintillators angeordnet ist, wobei das zweite Ende dem ersten Ende gegenüberliegt.

Das radiometrische Messgerät weist weiter eine Auswerteeinheit auf, beispielsweise in Form eines Mikroprozessors, die/der mit dem Photodetektor gekoppelt ist und die/der dazu ausgebildet ist, basierend auf einem von dem Photodetektor gegebenenfalls erzeugten Impuls einen Ort in Längsrichtung des stabförmigen Szintillator zu ermitteln, an dem ein den Impuls verursachendes Teilchen einer ionisierenden Strahlung auf den stabförmigen Szintillator getroffen ist.

In einer Ausführungsform weist die Auswerteeinheit eine Künstliche Intelligenz (KI)-Einheit auf, die dazu ausgebildet ist, basierend auf dem von dem Photodetektor erzeugten Impuls den Ort in Längsrichtung des stabförmigen Szintillator zu ermitteln.

In einer Ausführungsform weist die KI-Einheit eine Support Vector Machine und/oder ein Neuronales Netz auf.

In einer Ausführungsform weist das radiometrische Messgerät weiter mindestens eine Strahlungsquelle zur Erzeugung der ionisierenden Strahlung auf.

In einer Ausführungsform ist die mindestens eine Strahlungsquelle eine Gamma-Strahlungsquelle.

In einer Ausführungsform ist die Auswerteeinheit dazu ausgebildet, eine längsrichtungsabhängige Zählrate von Impulsen zu ermitteln. Beispielsweise wird für eine Anzahl von Positionen entlang der Längsrichtung die jeweilige Zählrate ermittelt.

In einer Ausführungsform ist die Auswerteeinheit dazu ausgebildet, basierend auf der ermittelten längsrichtungsabhängigen Zählrate einen Füllstand eines Behälters zu ermitteln. Beispielsweise kann bei einem Zählratensprung zwischen zwei benachbarten Positionen entlang der Längsrichtung darauf geschlossen werden, dass sich die dem Füllstand zugehörige Grenzfläche der Flüssigkeit in dem Behälter zwischen diesen beiden benachbarten Positionen befindet.

In einer Ausführungsform ist der Photodetektor ein Photomultiplier oder ein Silicon Photomultiplier.

In einer Ausführungsform weist das radiometrische Messgerät einen A/D-Wandler auf, der eine Abtastrate in einem Bereich zwischen 40 MHz und 5 GHz aufweist und der dazu ausgebildet ist, den von dem Photodetektor erzeugten Impuls A/D-zu-wandeln bzw. zu digitalisieren, wobei die Auswerteeinheit den digitalisierten Impuls ausgewertet.

Das Verfahren zum Betreiben des radiometrischen Messgeräts weist folgende Schritte auf: Erzeugen von Trainingsdaten zum Trainieren der KI-Einheit, indem der Szintillator an verschiedenen Orten in Längsrichtung mit ionisierender Strahlung derart beaufschlagt wird, dass für die verschiedenen Orte in Längsrichtung jeweils eine Anzahl von Impulsen mittels des Photodetektors erzeugt wird.

In einer Ausführungsform bestehen die Trainingsdaten aus einer Anzahl von Trainingsdaten-Paaren, wobei ein jeweiliges Trainingsdaten-Paar aus einem Ort in Längsrichtung x und einem zugehörigen Impuls besteht.

Stabdetektoren bestehen aus einem bis zu 8 m langem Szintillatorstab und einem Photodetektor mit Ausleseelektronik und werden für verschiedenste Messaufgaben in der radiometrischen Prozessmesstechnik eingesetzt. Typische Stabdetektoren messen die Gesamtzählrate, also die Anzahl der Gamma-Teilchen, die pro Zeiteinheit detektiert wird. Der Vorteil dieser Detektoren ist ein sehr simpler Aufbau, da lediglich ein stabförmiger Szintillator mit einem Photodetektor (PMT, SiPM) und einer Ausleseelektronik benötigt wird. Hierbei kann jedoch nicht festgestellt werden, wo das Gamma-Teilchen den Stabdetektor getroffen hat, es kann also keine Ortsinformation des Gammas-Teilchens bestimmt werden.

Die vorliegende Erfindung ermöglicht das Ermitteln dieser Ortsinformation mittels einer einfachen Hardware und einer intelligenten Pulsanalyse, insbesondere mit Methoden des maschinellen Lernens.

Die Erfindung wird nachfolgend unter Bezugnahme auf die Zeichnungen detailliert beschrieben. Hierbei zeigt:
- Fig. 1: hoch schematisch ein radiometrisches Messgerät zur Füllstandsmessung,
- Fig. 2: exemplarisch einen Impuls, der mittels eines Photodetektors des in Fig. 1 gezeigten radiometrischen Messgeräts erzeugt wurde und der charakteristisch ist für einen Ort in Längsrichtung eines stabförmigen Szintillators des in Fig. 1 gezeigten radiometrischen Messgeräts, an dem ein den Impuls verursachendes Teilchen einer ionisierenden Strahlung auf den stabförmigen Szintillator getroffen ist, und
- Fig. 3: eine längsrichtungsabhängige Zählrate, die mittels des radiometrischen Messgeräts von Fig. 1 ermittelt wurde und die von einem zu messenden Füllstand eines Behälters abhängt.

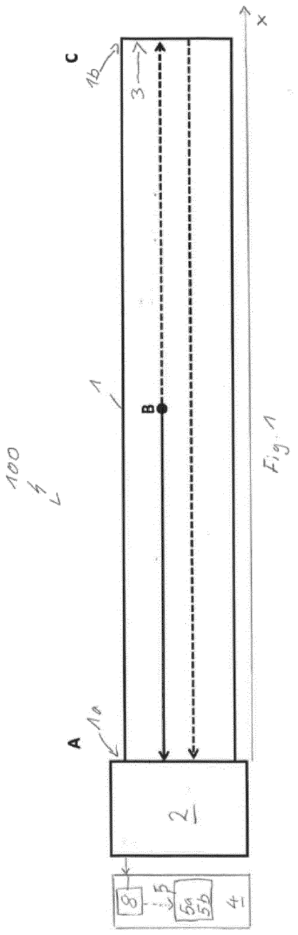

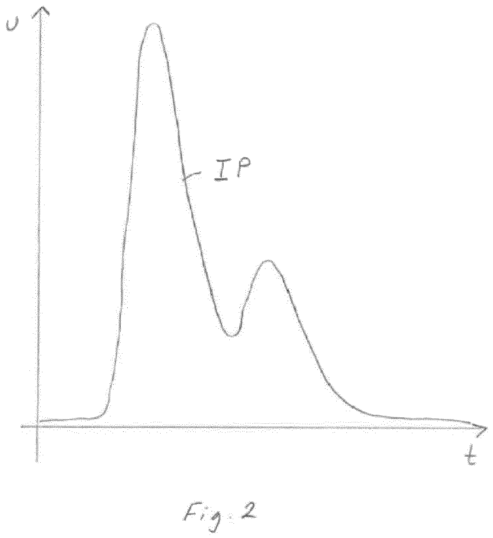

Fig. 1 zeigt hoch schematisch ein erfindungsgemäßes radiometrisches Messgerät 100, aufweisend: einen stabförmigen Szintillator 1, einen Photodetektor 2 in Form eines Photomultipliers, einen Spiegel 3, wobei der Photodetektor 2 mit einem ersten Ende 1a des stabförmigen Szintillators 1 optisch gekoppelt ist, wobei der Spiegel 3 an einem zweiten Ende 1b des stabförmigen Szintillators 1 angeordnet ist, und wobei das zweite Ende 1b dem ersten Ende 1a gegenüberliegt, und eine Auswerteeinheit 4, die mit dem Photodetektor 2 gekoppelt ist und die dazu ausgebildet ist, basierend auf einem von dem Photodetektor 2 erzeugten Impuls IP, siehe Fig. 2, einen Ort B in Längsrichtung x des stabförmigen Szintillator 1 zu ermitteln, an dem ein den Impuls IP verursachendes Teilchen einer ionisierenden Strahlung auf den stabförmigen Szintillator 1 getroffen ist.

Die Auswerteeinheit 4 weist eine Künstliche Intelligenz (KI)-Einheit 5 auf, die dazu ausgebildet ist, basierend auf dem von dem Photodetektor 2 erzeugten Impuls IP den Ort B in Längsrichtung x des stabförmigen Szintillator 1 zu ermitteln. Die KI-Einheit 5 kann beispielsweise eine Support Vector Machine 5a und/oder ein Neuronales Netz 5b aufweisen.

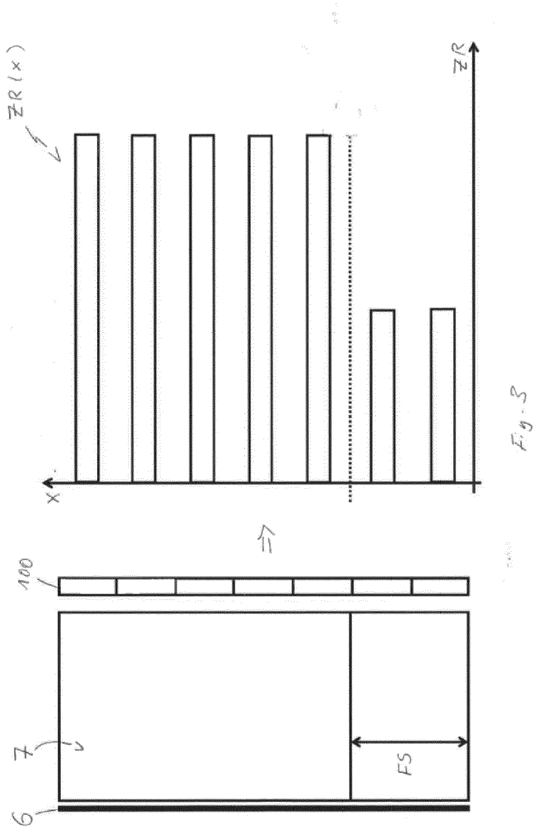

Bezug nehmend auf Fig. 3, weist das radiometrische Messgerät 100 weiter eine Gamma-Strahlungsquelle 6 zur Erzeugung von ionisierender Gamma-Strahlung auf.

Das radiometrische Messgerät 100 bzw. dessen Auswerteeinheit 4 ist dazu ausgebildet, eine längsrichtungsabhängige Zählrate ZR(x) von Impulsen zu ermitteln, wie diese beispielsweise in Fig. 3 dargestellt ist. Die Auswerteeinheit 4 ist dazu ausgebildet, basierend auf der ermittelten längsrichtungsabhängigen Zählrate ZR(x) einen Füllstand FS eines Behälters 7 zu ermitteln, siehe auch Fig. 3.

Erfindungsgemäß wird ein Ort des einfallenden Gamma-Teilchens indirekt über die Signallaufzeiten und Signalformen innerhalb des stabförmigen Szintillators bestimmt. Der Photodetektor 2 misst ein Summensignal basierend aus dem direkten Strahl und einem zeitlich verzögerten, am Spiegel 3 reflektierten Strahl.

Erreicht ein Gamma-Teilchen beispielsweise im Punkt B den stabförmigen Szintillator 1, emittiert der stabförmige Szintillator 1 das Licht isotrop in alle Richtungen. Auf Grund der internen Reflektionseigenschaften des stabförmigen Szintillators 1 dominieren allerdings nur die zwei Richtungen entlang der Längsrichtung x, andere Richtungen, beispielsweise senkrecht zur Längsrichtung x, haben nur eine geringe Wahrscheinlichkeit den Photodetektor 2 zu erreichen.

Unter der exemplarischen Annahme, dass Punkt B 100 cm vom Photodetektor 2 entfernt ist, erreicht der direkte Strahl in Richtung des Photodetektors 2 den Photodetektor 2 nach 100 cm Pfadlänge im stabförmigen Szintillator1. Der reflektierte Strahl muss bei einem stabförmigen Szintillator 1 mit der Gesamtlänge von 200 cm zunächst noch 100 cm bis zum Spiegel 3 am Szintillator-Ende und dann nochmals die kompletten 200 cm bis zum Photodetektor 2 zurücklegen, insgesamt also 300 cm. Bei einer gegebenen Lichtgeschwindigkeit im stabförmigen Szintillator 1 ergibt sich daraus ein Laufzeitunterschied zwischen dem direkten und dem reflektierten Strahl. Diese Laufzeitunterschiede kann man für mehrere Positionen entlang der Längsrichtung x berechnen. Der Start-Zeitpunkt entspricht hierbei dem Ankommen des direkten Pulses, der reflektierte Puls ist entsprechend der Position x in Längsrichtung verzögert.

Der durch den am Spiegel 3 reflektierten Strahl verursachte Impuls ist - abhängig von der Position x - in seiner Intensität abgeschwächt, da durch die größere Pfadlänge im stabförmigen Szintillator 1 mehr Licht absorbiert wird. Die Ortsinformation ist somit in der Impulsform des Pulses IP enthalten.

Es ist nun die Aufgabe, aus der Form des Impulses IP den Ort x bzw. B zu ermitteln. Hierfür existieren verschiedene Methoden, wie beispielsweise:
Analoge Techniken:
   - Pulse Shape Discrimination
   - Fensterintegrator
Digitale Techniken mit AD-Wandlung:
   - Algorithmiken:
      - Schwerpunkt des Pulses seit Trigger
      - Impulsbreite
      - Impulsmaximum-Erkennung (Haupt- und Reflektionsimpuls)
   - Machine Learning, beispielsweise:
      - Decision Trees / Forests
      - Support Vector Machines
      - Neural Networks (NN):
         - Fully Connected NN
         - Recurrent NN (z.B. LSTM)

Unabhängig von der gewählten Methode wird bevorzugt folgende Signalverarbeitungskette verwendet:
- Abtastung des Pulses IP mit einem AD-Wandler (typ. Abtastrate 80MHz-5GHz)
- Verarbeitung in der Auswerteeinheit 4 in einem FPGA/DSP/CPU pro Impuls IP
- Histogrammierung aller Pulspositionen x anhand der Ortsinformation im Signal, siehe die längsrichtungsabhängige Zählrate ZR(x) in Fig. 3
- Parallel wird eine Summenzählrate bestimmt

Die Aufgabe der Ortsinformationsbestimmung wird erfindungsgemäß bevorzugt mittels der Methoden des maschinellen Lernens gelöst. Hier eignen sich insbesondere Support Vector Machines und Neuronale Netze.

Wie bei Machine-Learning Ansätzen üblich, werden zunächst Trainingsdaten benötigt, die einzelnen Orten in Längsrichtung x zugeordnet sind. Hierbei werden in Längsrichtung x einzelne Klassen von beispielsweise je 10 cm Länge vorgegeben, wie dies in Fig. 3 exemplarisch mit 7 Klassen bzw. Segmenten dargestellt ist.

Zur Aufnahme der Trainingsdaten werden dann zum Beispiel pro Klasse 10000 Einzelpulse aufgenommen. Hierbei wird die Strahlungsquelle stark kollimiert, so dass die Gamma-Interaktion nur an dem zur Klasse korrespondierenden Ort x auftreten kann. Diese Messung wird für alle Klassen wiederholt.

Die Rohimpulse können noch geeignet bearbeitet werden, z.B. durch:
- Verwerfen von übersteuerten Impulsen: Die Impulsform muss ohne Sättigungseffekte aufgenommen worden sein, welche z.B. durch Übersteuerung des AD-Wandlers 8 herrühren können.
- Amplitudennormierung: Die Positionsinformation soll nur aus der Impulsform und nicht aus der Impulsamplitude gewonnen werden. Zwar beinhaltet die Amplitude auch eine Ortsinformation, welche aber durch eine Photodetektor-Regelung (Alterung, Temperatur) unter Umständen falsch sein könnte.
- Zeitausschnitt: Jeder Impuls wird so ausgeschnitten, dass immer der gleiche Zeitbereich relativ zu einem Trigger-Punkt ausgewertet wird. Dies kann nach der Amplitudennormierung gemacht werden, da nur so gleiche Zeiteigenschaften garantiert werden können
- Filterung: Die Positionsinformation befindet sich nur in einem engen Frequenzbereich im Impuls, daher können Störungen (Rauschen, EMV-Einstreuungen) über einen digitalen Filter eliminiert werden, ohne die Positionserkennung zu beeinflussen.
- Reduktion der Abtastpunkte: Zur schnelleren und effizienteren Signalverarbeitung kann die Anzahl der Abtastpunkte pro Impuls reduziert werden.
- Berechnung von Signaltransformationen (FFT, HHT, Wavelet): Es kann Vorteile bringen, neben dem Roh-Impuls noch die Spektrums-Information des Impulses für das maschinelle Lernen zur Verfügung zu stellen. Hierfür eignen sich insbesondere Fourier-, Hilbert-Huang-, und Wavelet-Transformation.
- Berechnung von Rekurrenz-Plots: Es kann vorteilhaft sein, nicht nur die Zeitsignale der Impulse auszuwerten, sondern auch sogenannte Rekurrenz-Plots zu erzeugen, welche dann mit Mitteln der Bilderkennung, wie z.B. Convolutional Neural Networks (CNN), weiterverarbeitet werden.

Nach dieser Impulsbearbeitung wird das KI -Modell trainiert. Danach können neu aufgenommene und bearbeitete Pulse den einzelnen Klassen zugeordnet werden.

Fig. 3 zeigt eine längsrichtungsabhängige Zählrate bzw. Zählratenverteilung ZR(x) entlang des stabförmigen Detektors 1, die mittels des radiometrischen Messgeräts von Fig. 1 ermittelt wurde und die von einem zu messenden Füllstand FS eines Behälters abhängt.

Basierend auf der Zählratenverteilung ZR(x) entlang des stabförmigen Detektors 1 kann über das Zählratenprofil unabhängig von der absoluten Zählrate der Füllstand FS ermittelt werden.

Wie in Fig. 3 gezeigt, sind die Zählraten von Orten x unterhalb des Füllstandes FS geringer als an Orten x oberhalb des Füllstands FS. Folglich kann basierend auf dem Zähratensprung der Füllstand FS ermittelt werden.

## Patentansprüche

1. Radiometrisches Messgerät (100), aufweisend:
- einen stabförmigen Szintillator (1),
- einen Photodetektor (2),
- einen Spiegel (3),
- wobei der Photodetektor (2) mit einem ersten Ende (1a) des stabförmigen Szintillators (1) optisch gekoppelt ist, und
- wobei der Spiegel (3) an einem zweiten Ende (1b) des stabförmigen Szintillators (1) angeordnet ist, wobei das zweite Ende (1b) dem ersten Ende (1a) gegenüberliegt, und
- eine Auswerteeinheit (4), die mit dem Photodetektor (2) gekoppelt ist und die dazu ausgebildet ist, basierend auf einem von dem Photodetektor (2) erzeugten Impuls (IP) einen Ort (B) in Längsrichtung (x) des stabförmigen Szintillator (1) zu ermitteln, an dem ein den Impuls (IP) verursachendes Teilchen einer ionisierenden Strahlung auf den stabförmigen Szintillator (1) getroffen ist.

2. Radiometrisches Messgerät (100) nach Anspruch 1, **dadurch gekennzeichnet, dass**
- die Auswerteeinheit (4) eine Künstliche Intelligenz (KI)-Einheit (5) aufweist, die dazu ausgebildet ist, basierend auf dem von dem Photodetektor (2) erzeugten Impuls (IP) den Ort (B) in Längsrichtung (x) des stabförmigen Szintillator (1) zu ermitteln.

3. Radiometrisches Messgerät (100) nach Anspruch 2, **dadurch gekennzeichnet, dass**
- die KI-Einheit (5) eine Support Vector Machine (5a) und/oder ein Neuronales Netz (5b) aufweist.

4. Radiometrisches Messgerät (100) nach einem der vorhergehenden Ansprüche, **dadurch gekennzeichnet, dass** das radiometrische Messgerät (100) weiter aufweist:
- mindestens eine Strahlungsquelle (6) zur Erzeugung der ionisierenden Strahlung.

5. Radiometrisches Messgerät (100) nach Anspruch 4, **dadurch gekennzeichnet, dass**
- die mindestens eine Strahlungsquelle (6) eine Gamma-Strahlungsquelle ist.

6. Radiometrisches Messgerät (100) nach einem der vorhergehenden Ansprüche, **dadurch gekennzeichnet, dass**
- die Auswerteeinheit (4) dazu ausgebildet ist, eine längsrichtungsabhängige Zählrate (ZR(x)) von Impulsen zu ermitteln.

7. Radiometrisches Messgerät (100) nach Anspruch 6, **dadurch gekennzeichnet, dass**
- die Auswerteeinheit (4) dazu ausgebildet ist, basierend auf der ermittelten längsrichtungsabhängigen Zählrate (ZR(x)) einen Füllstand (FS) eines Behälters (7) zu ermitteln.

8. Radiometrisches Messgerät (100) nach einem der vorhergehenden Ansprüche, **dadurch gekennzeichnet, dass**
- der Photodetektor (2) ein Photomultiplier oder ein Silicon Photomultiplier ist.

9. Radiometrisches Messgerät (100) nach einem der vorhergehenden Ansprüche, **dadurch gekennzeichnet, dass**
- das radiometrische Messgerät (100) einen A/D-Wandler (8) aufweist, der eine Abtastrate in einem Bereich zwischen 40 MHz und 5 GHz aufweist und der dazu ausgebildet ist, den von dem Photodetektor (2) erzeugten Impuls zu digitalisieren, wobei die Auswerteeinheit (4) den digitalisierten Impuls ausgewertet.

10. Verfahren zum Betreiben eines radiometrischen Messgeräts (100) nach einem der vorhergehenden Ansprüche, mit den Schritten:
- Erzeugen von Trainingsdaten zum Trainieren der KI-Einheit (5), indem der Szintillator (1) an verschiedenen Orten in Längsrichtung (x) mit ionisierender Strahlung derart beaufschlagt wird, dass für die verschiedenen Orte in Längsrichtung (x) jeweils eine Anzahl von Impulsen mittels des Photodetektors (2) erzeugt wird.

11. Verfahren nach Anspruch 10, mit den Schritten:
- die Trainingsdaten Trainingsdaten-Paare aufweisen, wobei ein jeweiliges Trainingsdaten-Paar aus einem Ort in Längsrichtung x und einem zugehörigen Impuls besteht.
